# EUROPÄISCHE PATENTSCHRIFT

(11) **EP 2 832 202 B1**
(45) Veröffentlichungstag und Bekanntmachung des Hinweises auf die Patenterteilung: **28.06.2017**
(21) Anmeldenummer: 14401083.2
(22) Anmeldetag: 29.07.2014
(51) Int. Cl.: A01C 7/12

(54) **Sämaschine**
Sowing machine
Semoir

(30) Priorität: 02.08.2013 DE 102013108339
(43) Veröffentlichungstag der Anmeldung: 04.02.2015
(73) Patentinhaber: Amazonen-Werke H. Dreyer GmbH & Co. KG, 49205 Hasbergen (DE)
(72) Erfinder: Brüggemann, Klaus, 27777 Ganderkesee (DE)

(56) Entgegenhaltungen:
- EP-B1- 2 011 382
- EP-B2- 1 430 761
- DE-U1- 9 307 231

## Beschreibung

Die Erfindung betrifft eine Sämaschine gemäß des Oberbegriffes des Patentanspruches 1.

Durch die EP 2 011 382 B1 ist eine derartige Sämaschine bekannt. Bei dieser Sämaschine sind die als Normal- und Feindosierräder ausgebildeten Dosierräder ebenfalls in Dosiergehäusen angeordnet. Die Dosierräder führen das in dem Vorratsbehälter befindliche Saatgut, Dünger und dergleichen in einstellbaren Mengen den Verteil- und/oder Ausbringeinrichtungen zu. Unterhalb der Dosierräder ist eine einstellbare Bodenplatte, die den Dosierrädern zugeordnet ist, angeordnet. Auf der Bodenplatte ist eine zwischen die in einem Dosiergehäuse angeordneten Normal- und Feindosierrädern eingreifende feststehende Trennplatte angeordnet. Weiterhin ist an dem Dosiergehäuse eine mit der Bodenplatte zusammenwirkende Trennwand angeordnet. Diese Trennwand ist auf die engste Bodenplattenstellung abgestimmt Eine weitere Sämaschine ist in der EP 1 430 761 B2 beschrieben. Diese Sämaschine ist zum Ausbringen von Saatgut, Dünger und dergleichen geeignet. Die Sämaschine weist einen Vorratsbehälter, Verteil- und/oder Ausbringeinrichtungen und eine zwischen dem Vorratsbehälter und den Verteil-und/oder Ausbringeinrichtungen angeordnete Dosiervorrichtung auf. Die Dosierräder sind als mehrere nebeneinander angeordnete und in Dosiergehäusen angeordnete als Normal- und Feindosierräder ausgebildet. Die Dosierräder führen das in dem Vorratsbehälter befindliche Saatgut, Dünger und dergleichen in einstellbaren Mengen den Verteil- und/oder Ausbringeinrichtungen zu. Unterhalb der Dosierräder ist zumindest eine vorzugsweise einstellbare Bodenplatte, die den Dosierrädern zugeordnet ist, angeordnet. Die Bodenplatte wird landläufig auch als Bodenklappe bezeichnet. Zwischen den in einem Dosiergehäuse angeordneten Normal- und Feindosierrädern ist jeweils eine mitdrehende Trennscheibe angeordnet. Es besteht die Gefahr, dass sich zwischen der Trennscheibe und den jeweiligen Normal- und Feindosierrädern Fremdkörper einklemmen und es so zu Störungen kommt, weil die eingeklemmten Fremdkörper nicht frei kommen.

Der Erfindung liegt die Aufgabe zu Grunde, ein störungsfreies Ausbringen des auszubringenden Materiales durch die in einem Dosiergehäuse angeordneten Normal- und Feindosierräder zu schaffen.

Diese Aufgabe wird erfindungsgemäß durch die kennzeichnenden Merkmale des Anspruches 1 gelöst.

Infolge dieser Maßnahmen wird durch die zwischen den Normal- und Feindosierrädern angeordnete Zwischenwand eine vollkommene Trennung von Normal- und Feindosierrad voneinander gewährleistet. Weiterhin wird durch die zweiteilige Ausgestaltung der Bodenplatte jedem Dosierrad eine eigene Bodenplatte zugeordnet, so dass in dem Dosiergehäuse Normal- und Feindosierrad voneinander getrennt sind und so jeweils eigene Dosiersysteme bilden. In einfacher Weise können Dosierräder unterschiedlicher Breite in dem Dosiergehäuse in austauschbarer Weise angeordnet werden, wenn die Zwischenwand in lös- und/oder herausnehmbarer Weise an dem Dosiergehäuse angeordnet ist.

Um ein gutes Zusammenwirken zwischen dem jeweiligen Dosierrad und der zugeordneten Bodenplatte sicherzustellen, ist vorgesehen, dass die jeweilige Bodenplatte eine an die jeweilige Breite des zugeordneten Dosierrades angepasste Breite aufweist.

Um wahlweise das eine oder andere Dosierrad in einem Dosiergehäuse von der Materialausbringung absperren zu können, ist vorgesehen, dass zwischen dem Vorratsbehälter und den Dosierrädern verschiebbar angeordnete Absperrschieber angeordnet sind, dass dem jeweiligen Normaldosierrad und dem jeweiligen Feindosierrad ein der jeweiligen Breite der Dosierräder entsprechender eigener Absperrschieber zugeordnet ist.

Zum wechselseitigen Absperren des Materialzuflusses zu dem jeweiligen Dosierrad, ist vorgesehen, dass die Absperrschieber unabhängig voneinander verschiebbar sind.

Um eine störungsfreie Funktion des Dosiersystems sicherzustellen, ist vorgesehen, dass zwischen den in einem Dosiergehäuse angeordneten Normal-und Feindosierrädern zugeordneten Bodenplatten ein derartiger Abstand vorhanden ist, der zumindest annähernd der Dicke der jeweiligen Zwischenwand entspricht.

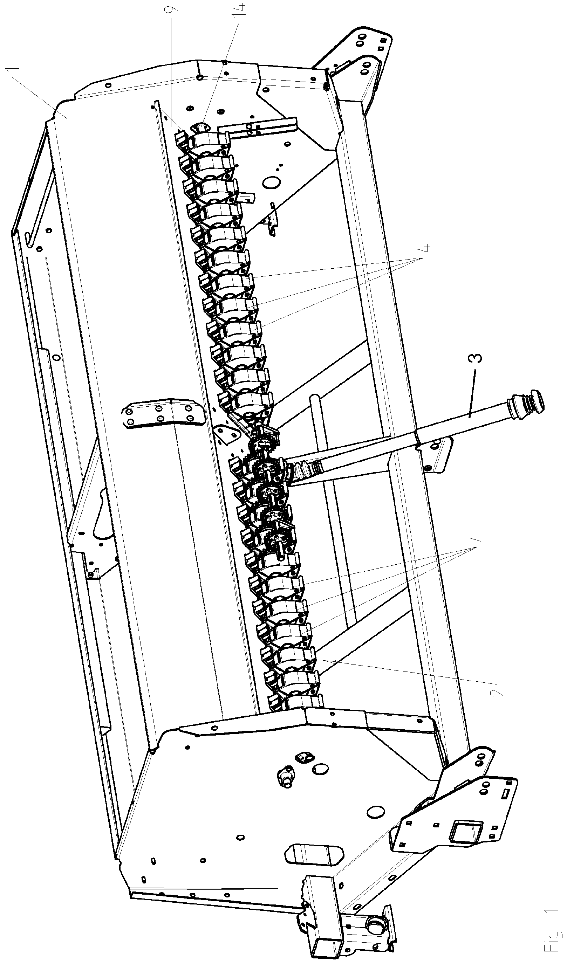

Weitere Einzelheiten der Erfindung sind der Beispielsbeschreibung zu entnehmen. Die Zeichnungen zeigen
- Fig.1: den Vorratsbehälter einer Sämaschine in Teilansicht, schematischer Darstellung sowie in perspektivischer Ansicht,
- Fig.2: ein an dem Vorratsbehälter anzuordnendes Dosiergehäuse mit Dosierorgan mit zugeordneten Absperrschiebern in perspektivischer Ansicht,
- Fig.3: das an dem Vorratsbehälter anzuordnende Dosiergehäuse mit Dosierorgan mit zugeordneten Absperrschiebern in perspektivischer Ansicht, wobei die Absperrschieber in einer anderen Position eingestellt sind,

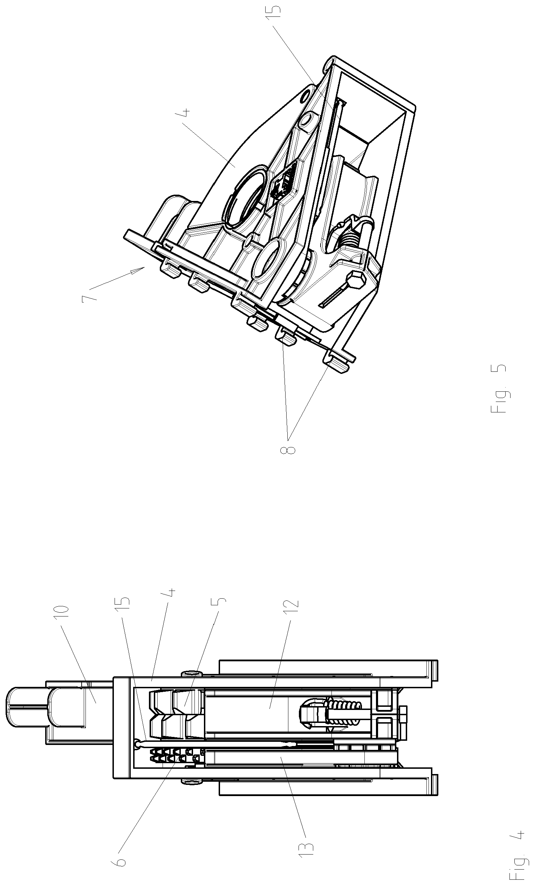

- Fig.4: das an dem Vorratsbehälter anzuordnende Dosiergehäuse mit Dosierorgan mit zugeordneten Absperrschiebern in der Ansicht von unten,
- Fig.5: das an dem Vorratsbehälter anzuordnende Dosiergehäuse mit Dosierorgan mit zugeordneten Absperrschiebern in einer anderen perspektivischen Ansicht,

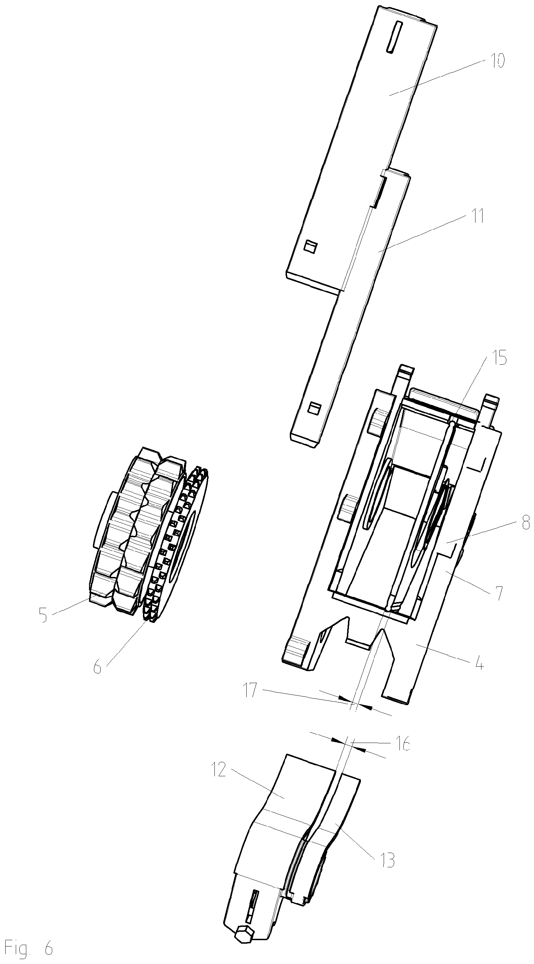

- Fig.6: das an dem Vorratsbehälter anzuordnende Dosiergehäuse mit Dosierorgan mit zugeordneten Absperrschiebern in einer anderen perspektivischen Ansicht und in Explosionsdarstellung und
- Fig.7: das an dem Vorratsbehälter anzuordnende Dosiergehäuse mit Dosierorgan mit zugeordneten Absperrschiebern in einer anderen perspektivischen Ansicht und in einer weiteren Explosionsdarstellung.

Die Sämaschine ist zum Ausbringen von Saatgut, Dünger und dergleichen geeignet. Von der Sämaschine sind lediglich der Vorratsbehälter 1, der zur Aufnahme des auszubringenden Materiales dient, die Dosiervorrichtung 2 und eine der Saatgutleitungen 3, die zu den als Säscharen ausgebildeten Verteil-und/oder Ausbringeinrichtungen führt, dargestellt. Die Dosiervorrichtung 2 ist zwischen dem Vorratsbehälter 1 und den Verteil- und/oder Ausbringeinrichtungen angeordnet. Die Dosiervorrichtung 2 weist mehrere nebeneinander angeordnete Dosiergehäuse 4 auf, in denen als Normal- 5 und Feinsäräder 6 ausgebildete Dosierräder angeordnet sind. Mittels der Dosierräder 5, 6 wird das in dem Vorratsbehälter 1 befindliche Saatgut, Dünger und dergleichen in einstellbaren Mengen den Verteil- und/oder Ausbringeinrichtungen zugeführt.

Die Dosiergehäuse 4 sind mittels der auf der Montageseite 7 des Dosiergehäuses 4 angeordneten Befestigungshaken 8 in bekannter Weise an der hinteren Seitenwand 9 des Vorratsbehälters 1 angeordnet. In diesem Bereich, in dem die Dosiergehäuse 4 angeordnet sind, sind Durchbrüche in der Seitenwand 9 des Vorratsbehälters 1 angeordnet, damit das sich im Vorratsbehälter 1 befindliche Material zu den in dem Dosiergehäuse 4 angeordneten Dosierrädern 5, 6 gelangen kann. Zwischen dem Vorratsbehälter 1 und den Dosierrädern 5, 6 sind dem Dosiergehäuse 4 die beiden Absperrschieber 10, 11, die unabhängig voneinander verschiebbar sind, angeordnet. Somit ist jedem Dosierrad 5, 6 ein eigener entsprechender Absperrschieber 10, 11 zugeordnet. Weiterhin sind unterhalb der Dosierräder 5, 6 in dem Dosiergehäuse 4 die vorzugsweise einstellbaren Bodenplatten 12, 13 die den Dosierrädern 5, 6 zugeordnet sind, angeordnet. Das jeweilige Normaldosierrad 5 und das jeweilige Feindosierrad 6 sind kraftschlüssig auf einer rotierend angetriebenen Dosierwelle 14 angeordnet.

Zwischen den in einem Dosiergehäuse 4 angeordneten Normal- 5 und Feindosierrad 6 ist eine an dem Dosiergehäuse 4 angeordnete Zwischenwand 15 angeordnet, die sich über die gesamte Ausdehnung des jeweiligen Normal- 5 und Feindosierrades 6 erstreckt. Die in einem Dosiergehäuse 4 angeordnete Bodenplatte ist zweigeteilt ausgebildet, so dass die eine Bodenplatte 12 den Normaldosierrad 5 und die andere Bodenplatte 13 dem Feindosierrad 6 zugeordnet ist. Die jeweilige Bodenplatte 12, 13 weist eine an die jeweilige Breite des zugeordneten Dosierrades 5, 6 angepasste Breite auf. Zwischen den beiden Bodenplatten 12, 13 befindet sich ein derartiger Abstand 16, der zumindest annähernd der Dicke 17 der jeweiligen Zwischenwand 15 entspricht. In bevorzugter Weise ist der Abstand 16 zwischen den beiden Bodenplatten 12, 13 etwas größer als die Dicke 17 der jeweiligen Zwischenwand 15.

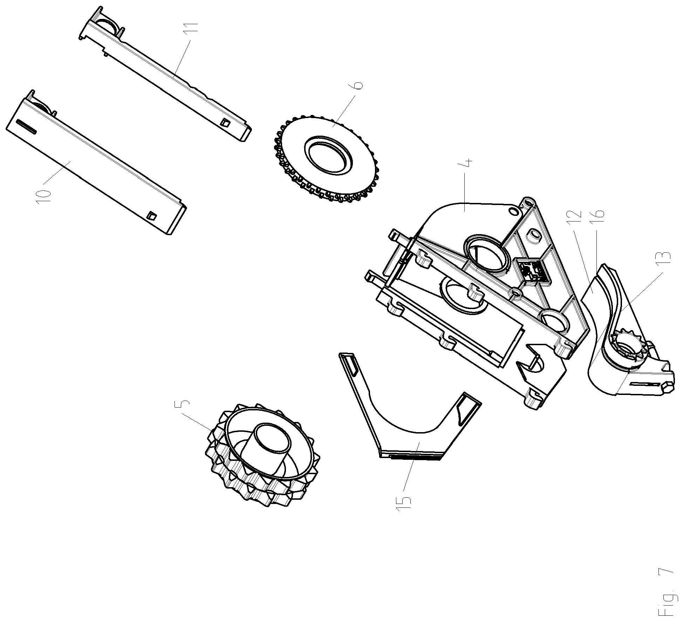

Die Zwischenwand 15 ist in lös- und herausnehmbarer Weise an dem Gehäuse 4 angeordnet, wie die Fig.7 zeigt.

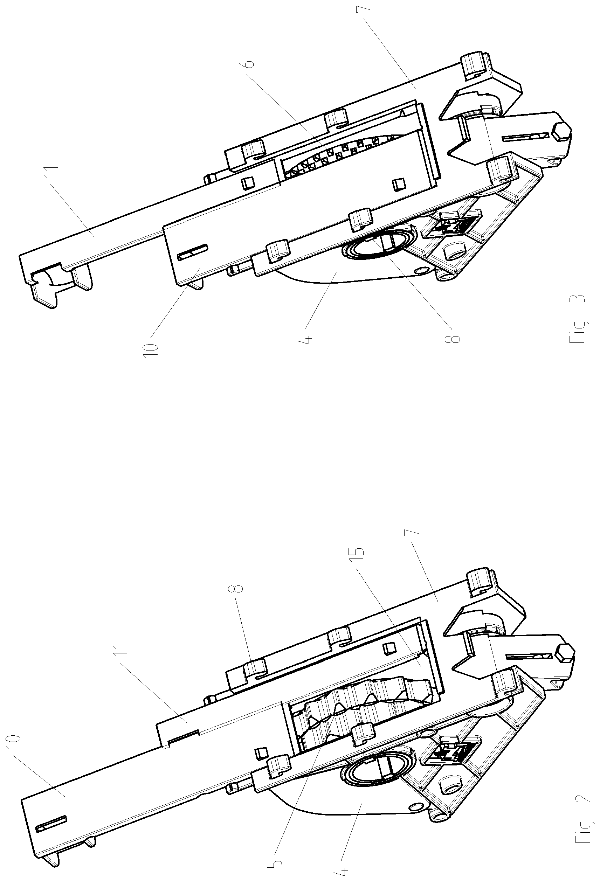

Durch die zwischen dem Normaldosierrad 5 und in dem Feindosierrad 6 angeordnete Zwischenplatte 15, die bis an die Rückseite der Absperrschieber 10, 11 heranreicht, wie Fig.2 zeigt, findet eine vollständige Abgrenzung zwischen diesen beiden Dosierrädern 5, 6 statt, so dass, wenn der jeweilige Absperrschieber 10, 11 nach unten geschoben ist, entweder das Normaldosierrad 5 oder das Feindosierrad 6 von der Materialzuführung aus dem Vorratsbehälter 1 abgesperrt ist. Gemäß der Einstellung der Absperrschieber 10, 11 nach Fig.2 ist das Feindosierrad 6 durch den schmalen Absperrschieber 11 von der Materialzuführung aus dem Vorratsbehälter 1 abgesperrt, während gemäß der Einstellung der Absperrschieber 10, 11 nach Fig.3 das Normaldosierrad 5 durch den weiteren Absperrschieber 10 von der Materialzuführung aus dem Vorratsbehälter 1 abgesperrt ist.

## Patentansprüche

1. Sämaschine zum Ausbringen von Saatgut, Dünger und dergleichen, mit einem Vorratsbehälter (1), Verteil- und/oder Ausbringeinrichtungen, und einer zwischen dem Vorratsbehälter (1) und den Verteil- und/oder Ausbringeinrichtungen angeordneten Dosiervorrichtung (2), die mehrere nebeneinander angeordnete und in Dosiergehäusen (4) angeordnete als Normal- (5) und Feindosierräder (6) ausgebildete Dosierräder aufweist, die das in dem Vorratsbehälter (1) befindliche Saatgut, Dünger und dergleichen in einstellbaren Mengen den Verteil- und/oder Ausbringeinrichtungen zuführen, wobei unterhalb der Dosierräder (5, 6) zumindest eine vorzugsweise einstellbare Bodenplatte (12, 13), die den Dosierrädern (5, 6) zugeordnet ist, angeordnet ist, wobei zwischen dem jeweiligen Normaldosierrad (5) und dem zugeordneten jeweiligen Feindosierrad (6) eine an dem Dosiergehäuse (4) angeordnete Zwischenwand (15) vorgesehen ist, **dadurch gekennzeichnet, dass** die den Dosierrädern (5, 6) zugeordnete Bodenplatte (12, 13) zweiteilig ausgebildet ist, dass die eine Bodenplatte (12) dem Normaldosierrad (5) und die andere Bodenplatte (13) dem Feindosierrad (6) zugeordnet ist, dass die Zwischenwand (15) in lös- und/oder herausnehmbarer Weise an dem Dosiergehäuse (4) angeordnet ist.

2. Sämaschine nach Anspruch 1, **dadurch gekennzeichnet, dass** die jeweilige Bodenplatte (12, 13) eine an die jeweilige Breite des zugeordneten Dosierrades (5, 6) angepasste Breite aufweist.

3. Sämaschine nach zumindest einem der vorstehenden Ansprüche, **dadurch gekennzeichnet, dass** zwischen dem Vorratsbehälter (1) und den Dosierrädern (5, 6) verschiebbar angeordnete Absperrschieber (10, 11) angeordnet sind, dass dem jeweiligen Normaldosierrad (5) und dem jeweiligen Feindosierrad (6) ein der jeweiligen Breite der Dosierräder (5, 6) entsprechender eigener Absperrschieber (10 ,11) zugeordnet ist.

4. Sämaschine nach Anspruch 3, **dadurch gekennzeichnet, dass** die Absperrschieber (10, 11) unabhängig voneinander verschiebbar sind.

5. Sämaschine nach zumindest einem der vorstehenden Ansprüche, **dadurch gekennzeichnet, dass** zwischen den in einem Dosiergehäuse (4) angeordneten Normal- (5) und Feindosierrädern (6) zugeordneten Bodenplatten (12, 13) ein derartiger Abstand (16) vorhanden ist, der zumindest annähernd der Dicke (17) der jeweiligen Zwischenwand (15) entspricht.

## Claims

1. Sowing machine for dispensing seed, fertilizer and the like, having a storage container (1), distributing and/or dispensing devices, and a metering apparatus (2), which is arranged between the storage container (1) and the distributing and/or dispensing devices and has a plurality of metering wheels which are arranged one beside the other in metering housings (4), designed in the form of normal-metering (5) and fine-metering (6) wheels and by means of which the seed, fertilizer and the like located in the storage container (1) is fed in adjustable quantities to the distributing and/or dispensing devices, wherein the metering wheels (5, 6) have arranged beneath them at least one preferably adjustable baseplate (12, 13), which is assigned to the metering wheels (5, 6), wherein an intermediate wall (15), which is arranged on the metering housing (4), is provided between the respective normal-metering wheel (5) and the associated respective fine-metering wheel (6), **characterized in that** the baseplate (12, 13), which is assigned to the metering wheels (5, 6), is designed in two parts, **in that** the one baseplate (12) is assigned to the normal-metering wheel (5) and the other baseplate (13) is assigned to the fine-metering wheel (6), and **in that** the intermediate wall (15) is arranged in a releasable and/or removable manner on the metering housing (4).

2. Sowing machine according to Claim 1, **characterized in that** the respective baseplate (12, 13) has a width which is adapted to the respective width of the associated metering wheel (5, 6).

3. Sowing machine according to at least one of the preceding claims, **characterized in that** displaceably arranged shut-off valves (10, 11) are arranged between the storage container (1) and the metering wheels (5, 6), and **in that** the respective normal-metering wheel (5) and the respective fine-metering wheel (6) is assigned a dedicated shut-off valve (10, 11) corresponding to the respective width of the metering wheels (5, 6).

4. Sowing machine according to Claim 3, **characterized in that** the shut-off valves (10, 11) can be displaced independently of one another.

5. Sowing machine according to at least one of the preceding claims, **characterized by** the presence, between the baseplates (12, 13) assigned to the normal-metering (5) and fine-metering (6) wheels arranged in a metering housing (4), of a distance (16) which is such as to correspond at least more or less to the thickness (17) of the respective intermediate wall (15).

## Revendications

1. Semoir pour épandre des semences, de l'engrais et similaires, comprenant un réservoir (1), des dispositifs de distribution et d'épandage et un dispositif de dosage (2) disposé entre le réservoir (1) et les dispositifs de distribution et/ou d'épandage, qui présente plusieurs roues de dosage disposées les unes à côté des autres et disposées dans des boîtiers de dosage (4), réalisées sous forme de roues de dosage normal (5) et de roues de dosage fin (6), qui acheminent les semences, l'engrais et similaires se trouvant dans le réservoir (1) en quantités ajustables au dispositif de distribution et/ou d'épandage, au moins une plaque de fond (12, 13) de préférence ajustable qui est associée aux roues de dosage (5, 6) étant disposée en dessous des roues de dosage (5, 6), une paroi intermédiaire (15) disposée au niveau du boîtier de dosage (4) étant prévue entre la roue de dosage normal respective (5) et la roue de dosage fin associée respective (6), **caractérisé en ce que** la plaque de fond (12, 13) associée aux roues de dosage (5, 6) est réalisée en deux parties, **en ce que** l'une des plaques de fond (12) est associée à la roue de dosage normal (5) et l'autre plaque de fond (13) est associée à la roue de dosage fin (6), et **en ce que** la paroi intermédiaire (15) est disposée de manière desserrable et/ou amovible sur le boîtier de dosage (4).

2. Semoir selon la revendication 1, **caractérisé en ce que** la plaque de fond respective (12, 13) présente une largeur adaptée à la largeur respective de la roue de dosage associée (5, 6).

3. Semoir selon au moins l'une quelconque des revendications précédentes, **caractérisé en ce qu'**entre le réservoir (1) et les roues de dosage (5, 6) sont disposées des vannes d'arrêt (10, 11) disposées de manière déplaçable, **en ce qu'**une vanne d'arrêt propre (10, 11) correspondant à la largeur respective des roues de dosage (5, 6) est associée à la roue de dosage normal respective (5) et à la roue de dosage fin respective (6).

4. Semoir selon la revendication 3, **caractérisé en ce que** les vannes d'arrêt (10, 11) peuvent être déplacées indépendamment l'une de l'autre.

5. Semoir selon au moins l'une quelconque des revendications précédentes, **caractérisé en ce qu'**entre des plaques de fond (12, 13) associées aux roues de dosage normal (5) et aux roues de dosage fin (6) disposées dans un boîtier de dosage (4) est prévu un espace (16) qui correspond au moins approximativement à l'épaisseur (17) de la paroi intermédiaire respective (15).
